# EUROPÄISCHE PATENTANMELDUNG

(11) **EP 4 653 734 A1**
(43) Veröffentlichungstag der Anmeldung: **26.11.2025**
(21) Anmeldenummer: 25176944.4
(22) Anmeldetag: 16.05.2025
(51) Int. Cl.: F16K 31/163, F16K 37/00

(54) **SPERRVORRICHTUNG**

(30) Priorität: 23.05.2024 DE 102024114504
(71) Anmelder: airpower europe GmbH, 53547 Dattenberg (DE)
(72) Erfinder: Hessling, Peter, 41812 Erkelenz (DE)
(74) Vertreter: Bauer PSU PartG mbB

(57) **Zusammenfassung**

Offenbart ist eine Sperrvorrichtung für eine Rohrleitung, aufweisend ein Absperrorgan mit einem Sperrelement und einer quer zu der Rohrleitung verlaufenden Spindel an dem Sperrelement, mit der das Sperrelement aus einer Offenstellung, in der es die Rohrleitung öffnet, in eine Sperrstellung bewegbar gelagert ist, in der es die Rohrleitung sperrt, einen pneumatisch steuerbaren Antrieb (4) mit einem mit der Spindel verbundenen und mit dieser bewegbar gelagerten Antriebselement und zwei mit Druckluft derart beaufschlagbaren Luftanschlüssen (24), dass die Druckluft die Spindel und mit dieser das Antriebselement bewegt, ein Ventil mit zwei Arbeitsanschlüssen, einem Zulufteingang für eine die Druckluft führende Versorgungsleitung, die das Ventil in zwei Schaltstellungen alternativ mit jeweils einem der Arbeitsanschlüsse verbindet und mit mindestens einem Entlüftungsanschluss, den das Ventil mit dem jeweils anderen der Luftanschlüsse verbindet, je Luftanschluss eine Luftleitung, die diesen mit dem jeweiligen Arbeitsanschluss verbindet, eine Messeinrichtung (7) zum Überwachen des Absperrorgans und eine Auswerteeinrichtung (8) zum Auswerten von Messwerten der Messeinrichtung (7).

Um die Sperrvorrichtung zu verbessern, wird vorgeschlagen, dass die Messeinrichtung (7) ein Druckmesselement und jede Luftleitung je einen Bypass zu dem Druckmesselement umfasst, wobei das Druckmesselement einen zwischen den Luftleitungen anliegenden Differenzdruck misst.

## Beschreibung

Die Erfindung betrifft eine Sperrvorrichtung für eine Rohrleitung, aufweisend ein Absperrorgan mit einem Sperrelement und einer quer zu der Rohrleitung verlaufenden Spindel an dem Sperrelement, mit der das Sperrelement aus einer Offenstellung, in der es die Rohrleitung öffnet, in eine Sperrstellung bewegbar gelagert ist, in der es die Rohrleitung sperrt, einen pneumatisch steuerbaren Antrieb mit einem mit der Spindel verbundenen und mit dieser bewegbar gelagerten Antriebselement und zwei mit Druckluft derart beaufschlagbaren Luftanschlüssen, dass die Druckluft die Spindel und mit dieser das Antriebselement bewegt, ein Ventil mit zwei Arbeitsanschlüssen, einem Zulufteingang für eine die Druckluft führende Versorgungsleitung, die das Ventil in zwei Schaltstellungen alternativ mit jeweils einem der Arbeitsanschlüsse verbindet und mit mindestens einem Entlüftungsanschluss, den das Ventil mit dem jeweils anderen der Luftanschlüsse verbindet, je Luftanschluss eine Luftleitung, die diesen mit dem jeweiligen Arbeitsanschluss verbindet, eine Messeinrichtung zum Überwachen des Absperrorgans und eine Auswerteeinrichtung zum Auswerten von Messwerten der Messeinrichtung.

Solche Sperrvorrichtungen sind aus DE 20 2004 020 347 U1 und DE 37 00 898 A1 bekannt. Die Messeinrichtung kann an einer Verbindungsstelle für Signalgeräte nach VDI/VDE 3845 & 47 an dem Antrieb angebracht sein. Die Messeinrichtung der bekannten Sperrvorrichtungen umfasst ein Winkelmesselement oder einen Hall-Sensor, um einen Drehwinkel des Sperrelements zu der Sperrstellung zu messen und beispielsweise ein Torsionsmesselement, um eine Fehlfunktion zu erkennen.

Die Luftleitung an den bekannten Sperrvorrichtungen besteht aus Rohren oder Schläuchen, die die Druckluft von dem Ventil an einer Verbindungsstelle nach VDI/VDE 3845 bzw. NAMUR in das Absperrorgan führen. Diese Luftleitungen sind im Betrieb anfällig für mechanische Beschädigung und Leckage.

Im Hintergrund der Erfindung offenbart DE 10 2008 007 651 B3 eine Sperrvorrichtung mit getrennten und getrennt regelbaren Ventilen zum Beaufschlagen der Luftanschlüsse. Aus DE 20 2018 101 944 U1 ist eine Schwenkarmatur bekannt.

### Aufgabe

Der Erfindung liegt die Aufgabe zugrunde, die Sperrvorrichtung zu verbessern.

### Lösung

Ausgehend von der bekannten Sperrvorrichtung wird nach der Erfindung vorgeschlagen, dass die Messeinrichtung ein Druckmesselement und jede Luftleitung je einen Bypass zu dem Druckmesselement umfasst, wobei das Druckmesselement einen zwischen den Luftleitungen anliegenden Differenzdruck misst.

Die Erfindung basiert auf der Erkenntnis, dass in jedem Absperrorgan der Differenzdruck zwischen den beiden Kammern beim Öffnen des Sperrelements ausgehend von der Sperrstellung bis zu der Offenstellung einen über dem Drehwinkel abhängig von den Betriebsparametern und dem Verschleißzustand abhängigen charakteristischen Verlauf aufweist. Bei gleichbleibenden Betriebsparametern geben Abweichungen von dem charakteristischen Verlauf so deutliche Hinweise auf Fehler und insbesondere auf Verschleiß der Armatur.

In jedem Schaltzustand des Ventils ist jeweils genau einer der Arbeitsanschlüsse über einen Entlüftungsanschluss mit der Umgebung verbunden und die über den jeweiligen Arbeitsanschluss angeschlossene Kammer des Absperrorgans steht unter Umgebungsdruck. Das Druckmesselement misst also mit dem Differenzdruck zwischen beiden Kammern den Absolutdruck in der mit der Versorgungsleitung verbundenen Kammer gegenüber der Umgebung. Dasselbe Messergebnis würde auch jeweils ein Druckmesselement zwischen der mit der Versorgungsleitung verbundenen Kammer und der Umgebung ergeben. Gegenüber der erfindungsgemäßen Anordnung eines einzigen Druckelements zwischen Luftleitungen wären hierfür aber zwei getrennte Druckmesselemente erforderlich.

Die Luftleitungen schließen unmittelbar an die Luftanschlüsse des Absperrorgangs an, so dass die in der erfindungsgemäßen Sperrvorrichtung über die Bypässe an das Druckmesselement übermittelten Drücke im Wesentlichen unverfälscht den Drücken in den Kammern des Absperrorgans entsprechen.

Das Ventil kann einen oder zwei Entlüftungsanschlüsse aufweisen, also ein 5/2- oder ein 4/2-Wegeventil sein.

Vorzugsweise bestehen in einer erfindungsgemäßen Sperrvorrichtung die Luftleitungen jeweils aus aneinander anschließenden Bohrungen in einem Anbaugehäuse. Eine solche erfindungsgemäße Sperrvorrichtung vermeidet außenliegende Schlauch- oder Rohrverbindungen und vermindert die Anfälligkeit für mechanische Beschädigung und Leckage.

Vorzugsweise weist eine solche erfindungsgemäße Sperrvorrichtung ein Anbaugerät mit der Messeinrichtung und der Auswerteeinrichtung auf. In einer solchen erfindungsgemäßen Sperrvorrichtung sind einerseits die Komponenten des Anbaugeräts und andererseits deren Verbindungen untereinander in dem Anbaugehäuse vor äußeren Einflüssen geschützt.

Vorzugsweise umfasst in einer erfindungsgemäßen Sperrvorrichtung die Messeinrichtung ein Winkelmesselement, das einen Drehwinkel des Sperrelements zu der Sperrstellung misst. Das Winkelmesselement erlaubt in einer solchen erfindungsgemäßen Sperrvorrichtung eine Auswertung des Differenzdrucks über dem Drehwinkel.

Vorzugsweise ist in einer erfindungsgemäßen Sperrvorrichtung das Sperrelement eine schwenkbare Klappe. Absperrorgane mit Klappe, Kugel oder Küken als Sperrelement sind allgemein bekannt.

Vorzugsweise ist in einer erfindungsgemäßen Sperrvorrichtung das Absperrorgan an einer ersten Verbindungsstelle und/oder das Anbaugerät an einer zweiten Verbindungsstelle an dem Antrieb angebracht. Weiter vorzugsweise ist die erste Verbindungsstelle nach DIN EN ISO 5211 und/oder die zweite Verbindungstelle nach VDI/VDE 3845 & 47 ausgestaltet. Absperrorgane mit solchen oder anderen anwendungsspezifischen oder genormten Verbindungsstellen sind allgemein bekannt.

Vorzugsweise weist in einer erfindungsgemäßen Sperrvorrichtung die Auswerteeinrichtung eine Kommunikationsschnittstelle zur Kommunikation mit einer Steuereinrichtung auf. Die Auswerteeinrichtung einer solchen erfindungsgemäßen Sperrvorrichtung kann insbesondere die Ergebnisse der Auswertung der Messergebnisse mit einer externen Steuereinrichtung kommunizieren. Die Kommunikationsschnittstelle kann kabelgebunden oder kabellos über Funk betrieben werden. Die Steuereinrichtung kann beispielsweise ein zentraler Leitrechner oder eine App auf einem über NFC mit der Auswerteeinrichtung verbundenen Smartphone sein.

Vorzugsweise weist in einer erfindungsgemäßen Sperrvorrichtung die Auswerteeinrichtung mindestens ein optisches Anzeigeelement zum Anzeigen eines Betriebszustands der Sperrvorrichtung auf. Solche Anzeigeelemente sind allgemein bekannt.

Vorzugsweise wird in einer erfindungsgemäßen Sperrvorrichtung ein Verlauf des Differenzdrucks über dem Schwenkwinkel in einem Auslieferungszustand der Sperrvorrichtung ermittelt und in dem Auswerteelement als Referenz gespeichert. Der Auslieferungszustand ist ein Zustand ohne Fehler und Verschleiß. Die Referenz bei Auslieferung kann zur Qualitätsdokumentation insbesondere unter standardisierten Bedingungen, beispielsweise Trinkwasser unter einem Überdruck von 1 bar bestimmt werden.

Vorzugsweise wird in einer erfindungsgemäßen Sperrvorrichtung zum Ermitteln eines Fehlerzustands der Differenzdruck abhängig von dem Schwenkwinkel mit der gespeicherten Referenz verglichen. Um im Betrieb anhand des Vergleichs einen Fehlerzustand erkennen zu können, muss zunächst die Referenz unter denselben Betriebsbedingungen in der Einbausituation bestimmt und gespeichert werden.

### Ausführungsbeispiel

Die Erfindung wird nachfolgend anhand eines Ausführungsbeispiels erläutert. Es zeigen
- Fig. 1: eine erfindungsgemäße Sperrvorrichtung,
- Fig. 2: das Antriebselement des Antriebs und

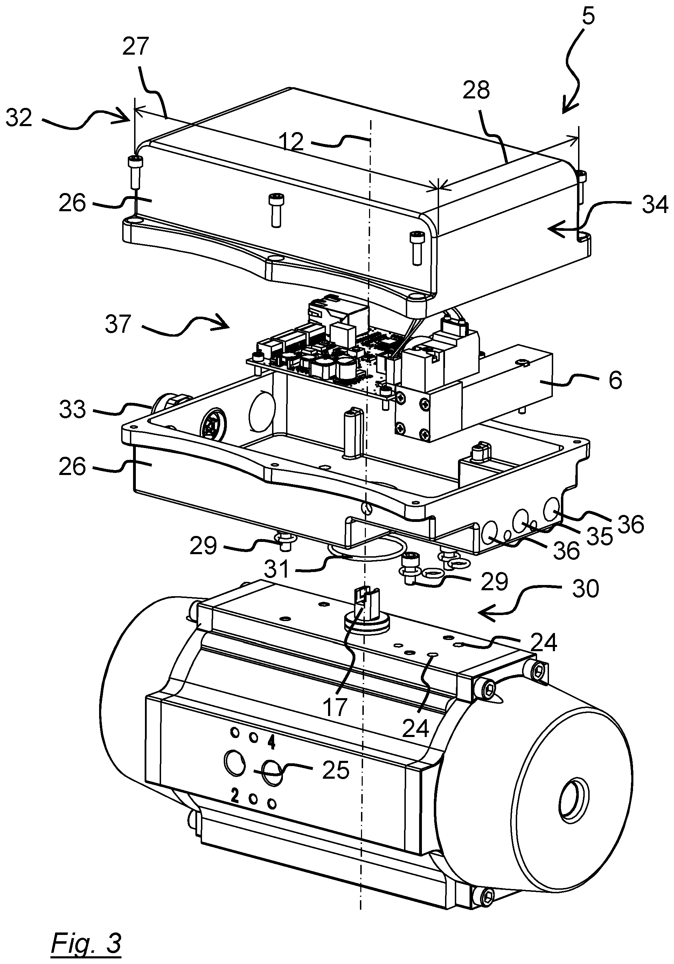

- Fig. 3: den Antrieb und das Anbaugerät der Sperrvorrichtung,

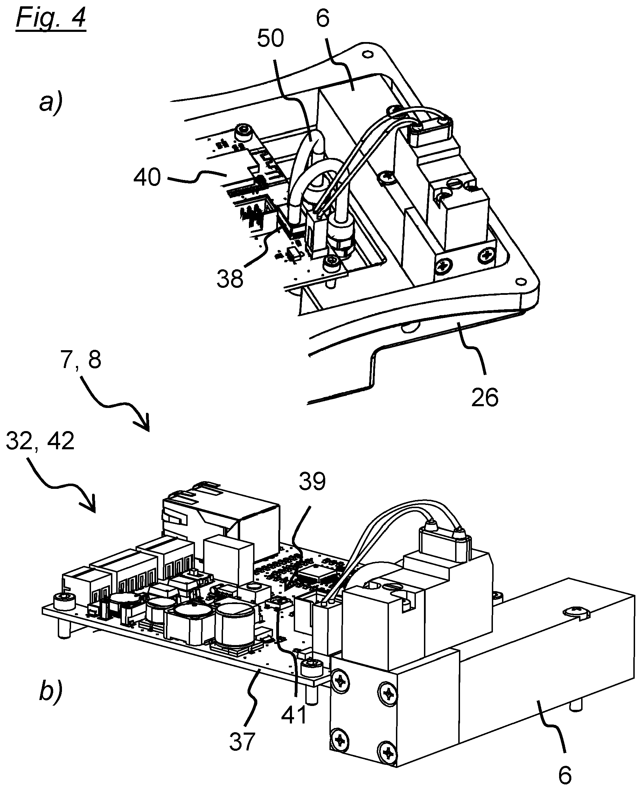

- Fig. 4a/b: das Innere des Anbaugeräts,

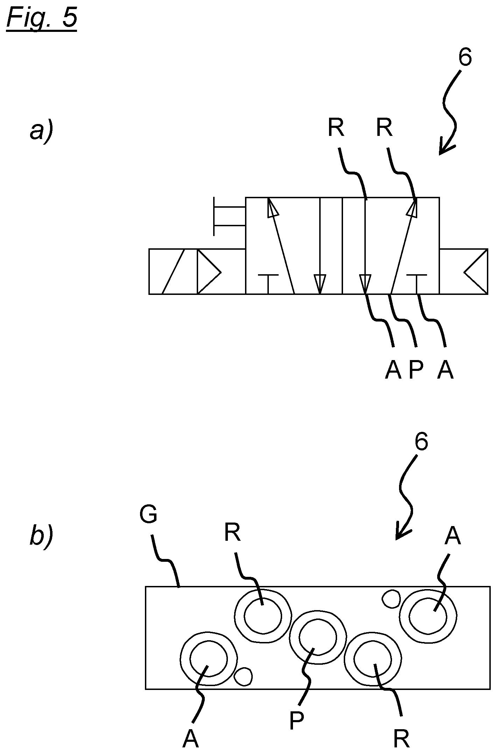

- Fig. 5a/b: ein Schaltbild und die Unterseite des Ventils,
- Fig. 6a/b: das Antriebsgehäuse des Antriebs,
- Fig. 7a/b: ein Detail des Anbaugehäuses,
- Fig. 8a/b: zwei Verläufe des Differenzdrucks.

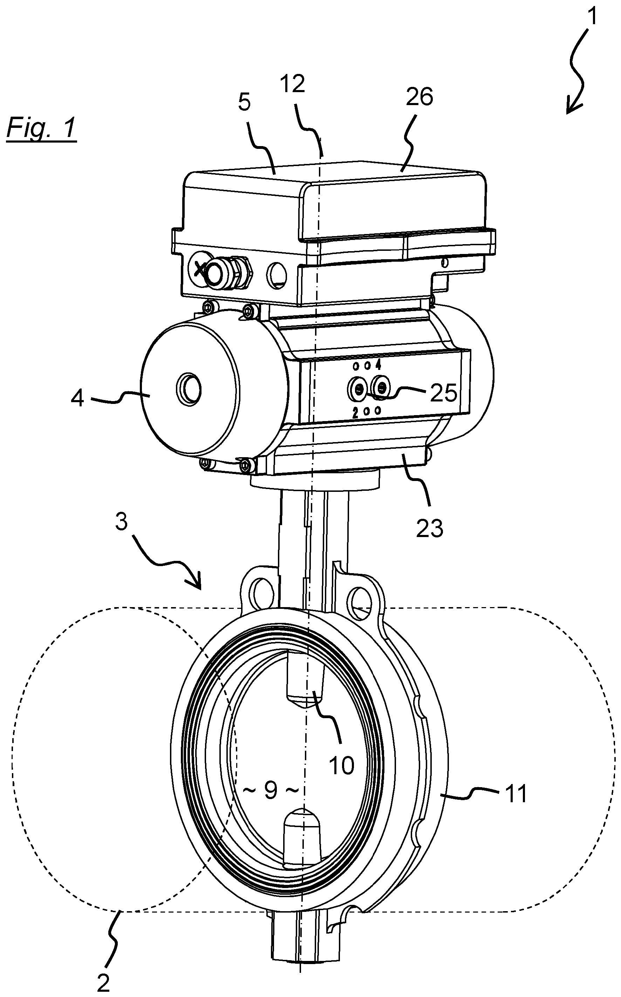

Figur 1 zeigt eine erfindungsgemäße Sperrvorrichtung 1 in einer nur gestrichelt angedeuteten Rohrleitung 2. Die Sperrvorrichtung 1 besteht aus einem Absperrorgan 3, einem pneumatischen Antrieb 4 für das Absperrorgan 3 und einem Anbaugerät 5, das ein Ventil 6 zum Ansteuern des Antriebs 4 und eine Messeinrichtung 7 und eine Auswerteeinrichtung 8 zum Überwachen des Absperrorgans 3 umfasst.

Das Absperrorgan 3 - hier: eine Schwenkarmatur - weist ein Sperrelement 9 - hier: eine Klappe - an einer quer zu der Rohrleitung 2 verlaufenden Spindel 10 auf. Die Spindel 10 und das Sperrelement 9 sind in einem ringförmigen Gehäuse 11 des Absperrorgans 3 um 90 ° aus einer nicht dargestellten Offenstellung um die Spindelachse 12 in die dargestellte Sperrstellung schwenkbar. In der Sperrstellung sperrt das Sperrelement 9 den Durchfluss durch die Rohrleitung 2. In der Offenstellung ist sie für den Durchfluss geöffnet.

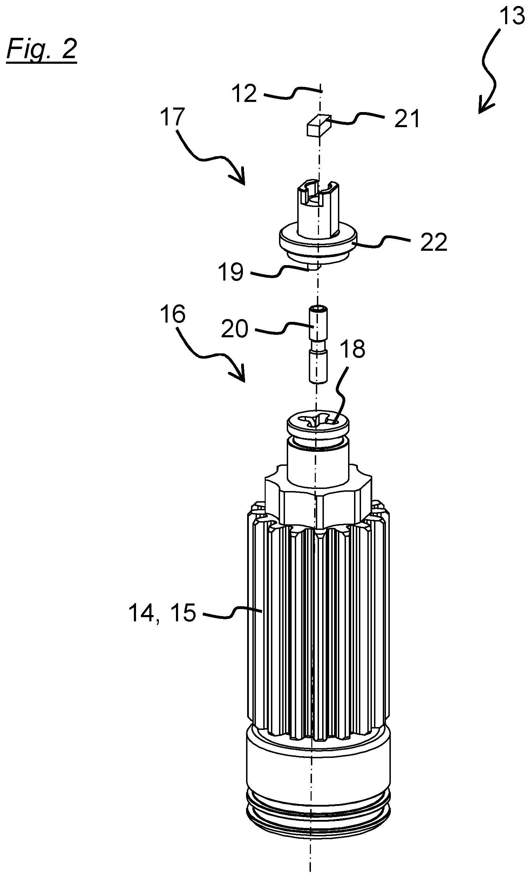

Der Antrieb 4 - hier: ein Schwenkantrieb - ist an einer nicht dargestellten Verbindungsstelle nach DIN ISO 5211 an dem Absperrorgan 3 angebracht und weist das in Figur 2 gezeigte, spindelförmige Antriebselement 13 auf. Das Antriebselement 13 besteht aus einem zylindrischen Grundkörper 14 mit einer Längsverzahnung 15 und einem an der dem Antrieb 4 abgewandten Kopfseite 16 angebrachten Anschlusselement 17. Das Anschlusselement 17 ist in einer kreuzförmigen Nut 18 im Grundkörper 14 mit einer entsprechenden Feder 19 gegen Verdrehen und in der Spindelachse 12 mit einer Madenschraube 20 mit Rechts-Links-Gewinde gesichert und zum Anschluss des Anbaugeräts 5 gestaltet, hier: entsprechend einer Verbindung mit einem Signalgerät nach VDI/VDE 3845 & 47. In das Anschlusselement 17 ist ein Permanentmagnet 21 eingelegt. Das Anschlusselement 17 liegt mit einem Kragen 22 auf dem Antriebsgehäuse 23 des Antriebs 4 auf und hält so das Antriebselement 13 im Antriebsgehäuse 23.

In dem Antrieb 4 sind zwei Druckkammern mit je einem Luftanschluss 24 ausgebildet. Zwischen den Druckkammern sind zwei in die Längsverzahnung 15 eingreifende Kolben quer zu der Spindel 10 derart gegensinnig verschiebbar gelagert, dass sie bei Beaufschlagen der Luftanschlüsse 24 mit Druckluft das Antriebselement 13 verschwenken. Die Kolben und die Druckkammern sind nicht dargestellt. Der Antrieb 4 weist eine in der Sperrvorrichtung 1 nicht genutzte und daher dicht verschlossene Verbindungsstelle 25 für Steuerventile nach VDI/VDE 3845 bzw. NAMUR auf.

Das Anbaugerät 5 weist ein zweiteiliges, verschraubtes Anbaugehäuse 26 mit einer Länge 27 von 90 mm und einer Breite 28 von 80 mm auf, das mit vier M3-Schrauben 29 an einer Verbindungsstelle 30 für Signalgeräte nach VDI/VDE 3845 & 47 an dem Antrieb 4 angebracht und am Anschlusselement 17 mit einem Dichtungsring 31 abgedichtet ist. Das Anbaugehäuse 26 weist auf einer ersten Stirnseite 32 eine Kabeldurchführung 33 und auf der gegenüberliegenden zweiten Stirnseite 34 einen Druckluftanschluss 35 und zwei Entlüftungsanschlüsse 36 auf.

Auf einer Leiterplatte 37 in dem Anbaugehäuse 26 sind einerseits die Komponenten der Messeinrichtung 7 angebracht, insbesondere ein Druckmesselement 38 und unmittelbar über dem Anschlusselement 17 ein magnetisches Winkelmesselement 39. Weiterhin sind auf der Leiterplatte 37 die Komponenten der Auswerteeinrichtung 8 angebracht, insbesondere ein programmierter Mikrocontroller 40 des Herstellers Espressif, ein optisches Anzeigeelement 41 - hier: eine RGB-LED - zum Anzeigen eines Betriebszustands der Sperrvorrichtung 1 und an der ersten Stirnseite 32 mehrere Anschlüsse 42, die mit dem Mikrocontroller 40 verbunden sind.

Das Ventil 6 - hier: ein 5/2-Wegeventil, Modell MDS 510 704 APE 24 DC des Herstellers Hafner Pneumatik - ist an der zweiten Stirnseite 34 unmittelbar in dem Anbaugehäuse 26 verschraubt. Das Ventil 6 weist an einem Ventilgehäuse G einen Zulufteingang P, zwei Entlüftungsanschlüsse R und zwei Arbeitsanschlüsse A auf. Das Ventil 6 weist genau zwei Schaltzustände auf, in denen alternativ jeweils einer der Arbeitsanschlüsse A mit dem Zulufteingang P und der jeweils andere Arbeitsanschluss A mit einem der Entlüftungsanschlüsse R verbunden ist.

Der Mikrocontroller 40 - hier: ein ESP32 des Herstellers Espressif - umfasst einen seriellen Flashspeicher und einen seriellen RAM sowie eine SMA-Buchse für eine externe Antenne und unterstützt die drahtlose Kommunikation über Bluetooth und WiFi. Das Winkelmesselement 39 - hier: Typ AS5048A des Herstellers AMS-Osram - erfasst die Stellung des Permanentmagneten 21 mit einer Auflösung von 14 bit und wird durch den Mikrocontroller 40 über eine integrierte SPI-Schnittstelle angesteuert. Das Druckmesselement 38 - hier: ein WSEN-PDUS Differenzdrucksensor des Herstellers Würth Elektronik - weist einen Messbereich von -100 bis 1000 kPa auf und wird durch den Mikrocontroller 40 über eine integrierte I2C-Schnittstelle angesteuert. Die Anschlüsse 42 umfassen eine Ethernetbuchse RJ45, einen Anschluss RS485, zwei optische SPS-Ausgänge und eine Versorgungsanschluss für ein nicht dargestelltes externes Netzteil mit einer Versorgungsspannung von 24 V.

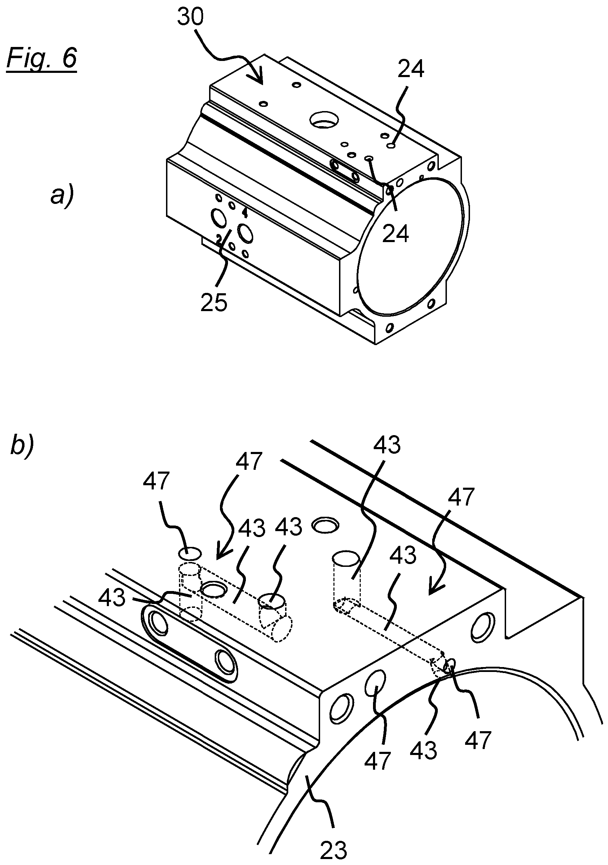

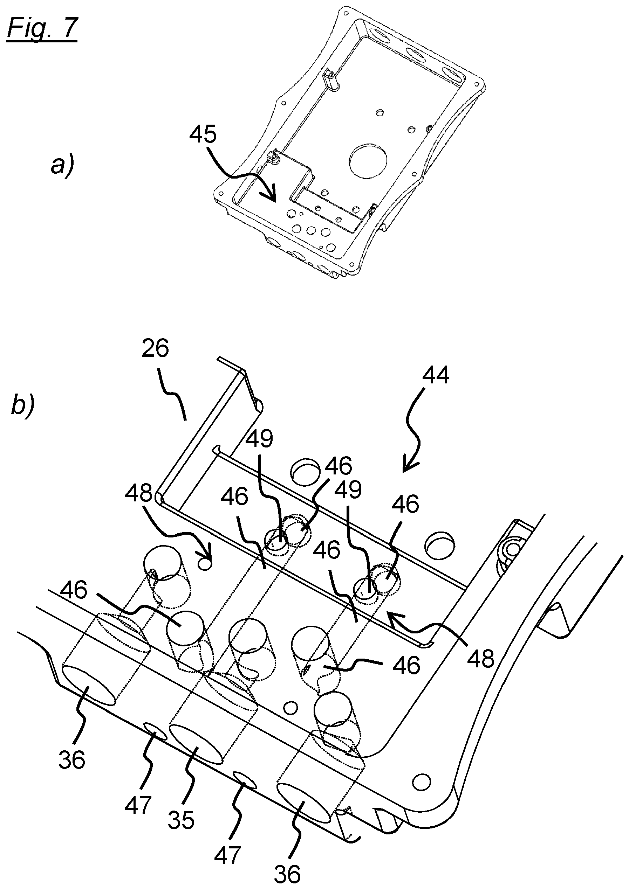

Die Luftanschlüsse 24 des Antriebs 4 führen über aneinander anschließende, in Figur 6 gezeigte Bohrungen 43 in dem Antriebsgehäuse 23 in die Druckkammern. Auf der Innenseite 44 des Anbaugehäuses 26 ist eine Grundplatte 45 für das Ventil 6 ausgebildet, über die der Druckluftanschluss 35 mit dem Zulufteingang P und die Entlüftungsanschlüsse 36 mit den Entlüftungsanschlüssen R des Ventils 6 verbunden sind und von den Arbeitsanschlüssen A des Ventils 6 aneinander anschließende, in Figur 7 gezeigte Bohrungen 46 zu den Luftanschlüssen 24 des Antriebs 4 führen.

Die Bohrungen 43, 46 sind von außen in das Antriebsgehäuse 23 und das Anbaugehäuse 26 eingebracht, soweit erforderlich an freien Enden 47 dicht verschlossen und bilden zwei Luftleitungen 48 zu den Luftanschlüssen 24 des Antriebs 4. Von beiden Luftleitungen 48 zweigt im Anbaugehäuse 26 jeweils ein Bypass 49 ab, der über Druckschläuche 50 mit dem Druckmesselement 38 auf der Leiterplatte 37 verbunden ist. Durch die Montage des Anbaugeräts 5 auf der Verbindungsstelle für Signalgeräte und die Luftführung durch die Bohrungen 43, 46 in Antriebsgehäuse 23 und Anbaugehäuse 26 ist keine außenliegende zusätzliche Verrohrung oder Schlauchverbindung erforderlich.

Im Betrieb der Sperrvorrichtung 1 ermittelt und überwacht die Auswerteeinrichtung 8 kontinuierlich die Stellzeit des Absperrorgans 3, die Position des Absperrorgans 3 (Drehwinkel α 0 bis 90 °) während des Öffnungs- und Schließvorganges des Sperrelements 9, die Ansteuerung und den Betrieb des Ventils 6, Stromausfälle, Betriebsstunden, Schalterzustände, die Umgebungstemperatur und den Differenzdruck Δp. Aus der kontinuierlichen Messung des Differenzdrucks Δp und des Drehwinkels α wird das Drehmoment und dessen Änderung während des Öffnungs- und Schließvorganges (Drehwinkel α 0 bis 90 °) des Absperrorgans 3 abgeleitet.

Aus dem Verlauf des Differenzdrucks Δp über dem Drehwinkel α wird das maximale und minimale Losbrechmoment (AUF-Moment) zur vollständigen Überwindung der Haftreibung (statischer Zustand) beim Herausdrehen des Sperrelements 9 aus dem Sitzring des Absperrorgans 3 beim Übergang in die Gleitreibung (dynamischer Zustand) abgeleitet. Beim Öffnen des Absperrorgans 3 wird grundsätzlich der höchste Differenzdruck Δp bzw. das höchste Drehmoment zur Überwindung der Haftreibung benötigt.

Durch die Messung und Analyse des Losbrechmoments abhängig vom Drehwinkel α des Sperrelements 9 kann zuverlässig festgestellt werden, wie hoch die Verpressung des Sperrelements 9 in Verbindung mit dem Sitzring ist. Das Losbrechmoment (bezogen auf einen Drehwinkel α von 0 bis ca. 10 ° des Sperrelements 9) ist abhängig von Material bzw. Reibungskoeffizient der Dichtung im Sitzring, Widerstand der Spindel 10 in dem Absperrorgan 3, Widerstand bzw. Zähigkeit des Fördermediums abhängig von der Prozesstemperatur und Fördergeschwindigkeit des Fördermediums. Das Laufmoment (zulässiges durchschnittliches Drehmoment im Steuerbetrieb) beträgt bezogen auf einen Drehwinkel α von 5 bis 90 ° des Sperrelements 9 nur noch etwa ein Drittel des Losbrechmoments und ist abhängig von Widerstand der Spindel 10 des Absperrorgans 3 und Widerstand bzw. Zähigkeit des Fördermediums.

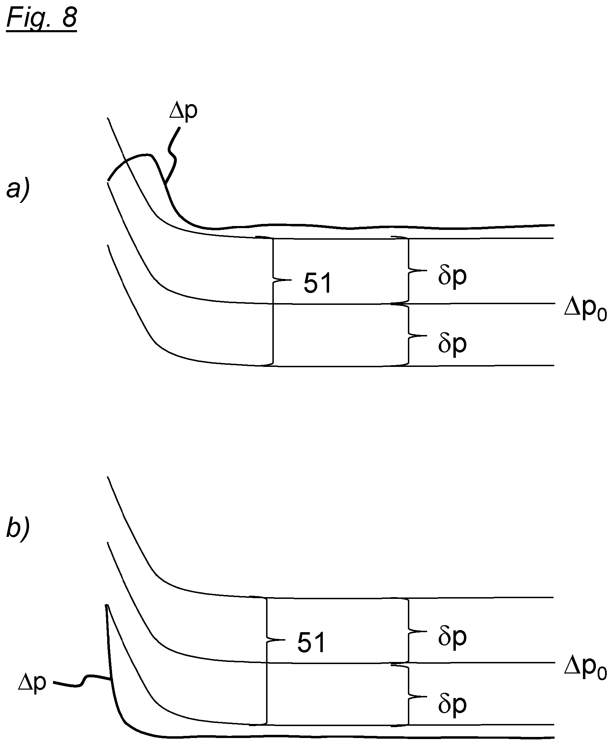

Figur 8a und 8b zeigen eine Referenz Δp₀ und einen zulässigen Arbeitsbereich 51 für den Differenzdruck Δp, wie sie in einer nicht dargestellten, mit der Sperrvorrichtung 1 verbundenen zentralen Steuerung grafisch dargestellt werden.

Die Referenz Δp₀ ist der bei Inbetriebnahme der erfindungsgemäßen Sperrvorrichtung 1 aufgenommene Verlauf des Differenzdrucks Δp während des Öffnungs- und Schließvorgangs über dem Drehwinkel α des Sperrelements 9 von 0 bis 90 °. Der zulässige Arbeitsbereich 51 ist durch eine vom Anwender gesetzte zulässige absolute Abweichung δp von der Referenz Δp₀ definiert. Alternativ kann der Arbeitsbereich 51 durch Prozentangaben δpₘᵢₙ/Δp₀ und δpₘₐₓ/Δp₀ relativ zu der Referenz Δp₀ (beispielsweise +10 % und -20 %) definiert werden.

Figur 8a zeigt beispielhaft einen Verlauf des Differenzdrucks Δp, der den maximal zulässigen Wert überschreitet. Ein solcher im Betrieb gemessener Verlauf weist auf eine Blockade des Sperrelements 9 in dem Absperrorgan 3 beispielsweise durch eine beschädigte Dichtung, Feststoffe im Fördermedium oder Bruch der Spindel 10 hin. Figur 8b zeigt beispielhaft einen Verlauf des Differenzdrucks Δp, der den minimal zulässigen Wert unterschreitet. Ein solcher im Betrieb gemessener Verlauf weist auf eine Undichtheit des Absperrorgans 3 beispielsweise durch Verschleiß der Dichtung oder des Sperrelements 9 hin. So können Leckagen frühzeitig erkannt und ungeplante Stillstandszeiten vermieden und die vorbeugende Instandhaltung durch eine verschleißabhängige betriebliche Wartung nach dem Istzustand ersetzt werden.

In den Figuren sind
- 1: Sperrvorrichtung
- 2: Rohrleitung
- 3: Absperrorgan
- 4: Antrieb
- 5: Anbaugerät
- 6: Ventil
- 7: Messeinrichtung
- 8: Auswerteeinrichtung
- 9: Sperrelement
- 10: Spindel
- 11: Gehäuse
- 12: Spindelachse
- 13: Antriebselement
- 14: Grundkörper
- 15: Längsverzahnung
- 16: Kopfseite
- 17: Anschlusselement
- 18: Nut
- 19: Feder
- 20: Madenschraube
- 21: Permanentmagnet
- 22: Kragen
- 23: Antriebsgehäuse
- 24: Luftanschluss
- 25: Verbindungsstelle
- 26: Anbaugehäuse
- 27: Länge
- 28: Breite
- 29: Schraube
- 30: Verbindungsstelle
- 31: Dichtungsring
- 32: erste Stirnseite
- 33: Kabeldurchführung
- 34: zweite Stirnseite
- 35: Druckluftanschluss
- 36: Entlüftungsanschluss
- 37: Leiterplatte
- 38: Druckmesselement
- 39: Winkelmesselement
- 40: Mikrocontroller
- 41: Anzeigeelement
- 42: Anschlüsse
- G: Ventilgehäuse
- P: Zulufteingang
- R: Entlüftungsanschluss
- A: Arbeitsanschluss
- 43: Bohrung
- 44: Innenseite
- 45: Grundplatte
- 46: Bohrung
- 47: Ende
- 48: Luftleitung
- 49: Bypass
- 50: Druckschlauch
- α: Drehwinkel
- Δp: Differenzdruck
- Δp₀: Referenz
- 51: Arbeitsbereich
- δp: zulässige Abweichung

## Patentansprüche

1. Sperrvorrichtung (1) für eine Rohrleitung (2), aufweisend
a. ein Absperrorgan (3) mit einem Sperrelement (9) und einer quer zu der Rohrleitung (2) verlaufenden Spindel (10) an dem Sperrelement (9), mit der das Sperrelement (9) aus einer Offenstellung, in der es die Rohrleitung (2) öffnet, in eine Sperrstellung bewegbar gelagert ist, in der es die Rohrleitung (2) sperrt,
b. einen pneumatisch steuerbaren Antrieb (4) mit einem mit der Spindel (10) verbundenen und mit dieser bewegbar gelagerten Antriebselement (13) und zwei mit Druckluft derart beaufschlagbaren Luftanschlüssen (24), dass die Druckluft die Spindel (10) und mit dieser das Antriebselement (13) bewegt,
c. ein Ventil (6) mit zwei Arbeitsanschlüssen (A), einem Zulufteingang (P) für eine die Druckluft führende Versorgungsleitung, die das Ventil (6) in zwei Schaltstellungen alternativ mit jeweils einem der Arbeitsanschlüsse (A) verbindet und mit mindestens einem Entlüftungsanschluss (R), den das Ventil (6) mit dem jeweils anderen der Luftanschlüsse (24) verbindet,
d. je Luftanschluss (24) eine Luftleitung (48), die diesen mit dem jeweiligen Arbeitsanschluss (A) verbindet,
e. eine Messeinrichtung (7) zum Überwachen des Absperrorgans (3) und
f. eine Auswerteeinrichtung (8) zum Auswerten von Messwerten der Messeinrichtung (7),
***dadurch gekennzeichnet, dass*** die Messeinrichtung (7) ein Druckmesselement (38) und jede Luftleitung (48) je einen Bypass (49) zu dem Druckmesselement (38) umfasst, wobei das Druckmesselement (38) einen zwischen den Luftleitungen (48) anliegenden Differenzdruck (Δp) misst.

2. Sperrvorrichtung (1) nach dem vorgenannten Anspruch, ***dadurch gekennzeichnet, dass*** die Luftleitungen (48) jeweils aus aneinander anschließenden Bohrungen (43, 46) in einem Anbaugehäuse (26) bestehen.

3. Sperrvorrichtung (1) nach dem vorgenannten Anspruch, ***gekennzeichnet durch*** ein Anbaugerät (5) mit der Messeinrichtung (7) und der Auswerteeinrichtung (8).

4. Sperrvorrichtung (1) nach einem der vorgenannten Ansprüche, ***dadurch gekennzeichnet, dass*** die Messeinrichtung (7) ein Winkelmesselement (39) umfasst, das einen Drehwinkel (α) des Sperrelements (9) zu der Sperrstellung misst.

5. Sperrvorrichtung (1) nach einem der vorgenannten Ansprüche, ***dadurch gekennzeichnet, dass*** das Sperrelement (9) eine schwenkbare Klappe ist.

6. Sperrvorrichtung (1) nach einem der vorgenannten Ansprüche, ***dadurch gekennzeichnet, dass*** das Absperrorgan (3) an einer ersten Verbindungsstelle vorzugsweise nach DIN EN ISO 5211 und/oder das Anbaugerät (5) an einer zweiten Verbindungsstelle (30) vorzugsweise nach VDI/VDE 3845 & 47 an dem Antrieb (4) angebracht ist.

7. Sperrvorrichtung (1) nach einem der vorgenannten Ansprüche, ***dadurch gekennzeichnet, dass*** die Auswerteeinrichtung (8) eine Kommunikationsschnittstelle zur Kommunikation mit einer Steuereinrichtung aufweist.

8. Sperrvorrichtung (1) nach einem der vorgenannten Ansprüche, ***dadurch gekennzeichnet, dass*** die Auswerteeinrichtung (8) mindestens ein optisches Anzeigeelement zum Anzeigen eines Betriebszustands der Sperrvorrichtung (1) aufweist.

9. Verfahren zum Betrieb einer Sperrvorrichtung (1) nach einem der vorgenannten Ansprüche, ***dadurch gekennzeichnet, dass*** ein Verlauf des Differenzdrucks (Δp) über dem Schwenkwinkel in einem Auslieferungszustand der Sperrvorrichtung (1) ermittelt und in dem Auswerteelement als Referenz (Δp₀) gespeichert wird.

10. Verfahren nach dem vorgenannten Anspruch, ***dadurch gekennzeichnet, dass*** zum Ermitteln eines Fehlerzustands der Differenzdruck (Δp) abhängig von dem Schwenkwinkel mit der gespeicherten Referenz (Δp₀) verglichen wird.
